# FASCICULE DE BREVET EUROPEEN

(11) **EP 2 299 882 B1**
(45) Date de publication et mention de la délivrance du brevet: **17.09.2014**
(21) Numéro de dépôt: 09769039.0
(22) Date de dépôt: 15.01.2009
(51) Int. Cl.: A47J 31/54, F24H 1/00, H05B 1/00

(54) **CHAUDIERE POUR MACHINE DE PREPARATION DE BOISSONS CHAUDES**
KOCHER FÜR EINE MASCHINE ZUR ZUBEREITUNG VON HEISSGETRÄNKEN
BOILER FOR A MACHINE FOR PREPARING HOT DRINKS

(30) Priorité: 27.06.2008 FR 0854348
(43) Date de publication de la demande: 30.03.2011
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2009/050438
(87) Numéro de publication internationale: WO 2009/156190

(56) Documents cités:
- EP-A- 1 293 597
- DE-A1- 19 847 670
- FR-A- 2 855 359

## Description

La présente invention concerne une chaudière pour machine de préparation de boissons chaudes. Elle trouvera notamment son application pour les chaudières de machines à café.

De manière connue, des chaudières pour machine de préparation de boissons chaudes comportent un bloc de métal définissant une chambre de chauffage et à l'intérieur duquel est noyé un élément résistif. Ces chaudières ont pour inconvénient de présenter une grande inertie thermique et nécessite un temps relativement long pour chauffer le liquide. Par ailleurs, l'obtention de ces chaudières induit un coût de matière important. Une chaudière connue est décrite dans le document DE 19847670.

Afin d'obtenir une boisson chaude en un temps réduit, il a été proposé des chaudières capables d'élever rapidement la température d'un liquide servant à la préparation d'une boisson. Ces chaudières comportent habituellement un élément chauffant à forte densité de puissance du type résistance sérigraphiée associé à un diffuseur.

Ces chaudières ne sont cependant pas utilisées pour la préparation de boissons nécessitant une mise sous pression substantielle du liquide. En effet, elles ne résistent pas à des pressions relativement importantes de l'ordre de 8 - 10 bars tout en conservant un encombrement et un coût limités. Or, la préparation de certaines boissons telles que le café expresso requiert de porter le liquide à une pression d'environ 16 bars en vue de l'extraction du café.

Ainsi, il existe un besoin consistant à proposer une chaudière pour machine de préparation de boissons chaudes qui permette de chauffer rapidement un liquide porté à une pression élevée tout en conservant un encombrement et un coût limités.

La présente invention vise à satisfaire ce besoin.

A cet effet, l'invention prévoit une chaudière pour machine de préparation de boissons chaudes comme définie dans la revendication 1.

Ainsi, la pression du liquide dans le volume de chauffage peut être relativement élevée sans pour autant que le diffuseur n'ait à encaisser la totalité des efforts générés par cette pression. On peut donc se passer de diffuseurs robustes et épais. L'invention offre ainsi une plus grande liberté de choix dans la conception des diffuseurs. Elle permet notamment de sélectionner des diffuseurs dont les dimensions et/ou les matériaux favorisent la conduction thermique entre la résistance sérigraphiée ou photogravée et le liquide à chauffer.

De manière facultative mais néanmoins avantageuse, l'invention peut présenter l'une quelconque des caractéristiques suivantes:
- les moyens d'appui présentent une forme sensiblement complémentaire de la résistance sérigraphiée ou photogravée, de sorte à venir au contact de la première paroi du diffuseur sans interférer avec les pistes résistives.
- les moyens d'appui sont agencés de sorte à être placés au contact de la deuxième paroi sur sensiblement 50 à 98% de la surface de la deuxième paroi non occupée par la résistance sérigraphiée ou photogravée.
- les moyens d'appui sont agencés de sorte à être placés au contact de la deuxième paroi sur au moins 70% de la surface de la deuxième paroi non occupée par la résistance sérigraphiée ou photogravée.
- les moyens d'appui sont agencés de sorte à être placés au contact de la deuxième paroi sur sensiblement 50% à 98% de la surface de la deuxième paroi non occupée par la résistance sérigraphiée ou photogravée.
- les moyens d'appui sont agencés de sorte à être placés au contact de la deuxième paroi sur sensiblement toute la surface de la deuxième paroi non occupée par la résistance sérigraphiée ou photogravée.
- le diffuseur présente une épaisseur comprise entre 2 et 4 millimètres, le pourtour périphérique du motif définit une surface comprise entre 60% et 90% du diffuseur et la coopération des moyens d'appui et du corps autorise une pression du liquide dans la chaudière de l'ordre de 30 bars.
- le dispositif comporte un support faisant office de bâti et recevant les moyens d'appui.
- le support et les moyens d'appui forment une pièce monobloc.
- les moyens d'appui s'intègrent dans le support par emboîtement.
- le volume de chauffage est situé en périphérie des moyens de chauffage et les moyens de chauffage sont situés en périphérie des moyens d'appui.
- les moyens de chauffage sont situés en périphérie du volume de chauffage et les moyens d'appui sont situés en périphérie des moyens de chauffage de sorte à envelopper ces derniers.
- les moyens de chauffage présentent une forme sensiblement cylindrique.
- la section des moyens de chauffage selon l'axe du cylindre est sensiblement circulaire.
- la section des moyens de chauffage selon l'axe du cylindre présente une forme sensiblement polygonale et de préférence carrée.
- la chaudière comprend au moins deux diffuseurs dont les deuxièmes parois sont tournées et mutuellement en regard et enserrent les moyens d'appui.
- le diffuseur est sensiblement plat.
- le support présente au moins une zone centrale dans laquelle sont situés les moyens d'appui et qui est destinée à recevoir le diffuseur et au moins une zone périphérique située en périphérie de la zone centrale et par laquelle le corps est destiné à être solidarisé du support.
- le support présente une symétrie par rapport à un plan médian
- la chaudière présente une symétrie par rapport à un plan médian.
- la chaudière comporte un diffuseur présentant une épaisseur comprise entre 2 et 4 millimètres. Cette épaisseur permet de favoriser la conductibilité sans créer une trop grande inertie liée à la masse métallique.

La surface de la résistance sérigraphie, c'est-à-dire la longueur développée de la piste multipliée par la largeur de la piste, représente de 30 à 60% de la surface totale du diffuseur. Cela permet d'atteindre des densités de puissance de 15 à plus de 40 watt/cm².

Le pourtour périphérique du motif définit une surface comprise entre 60 et 90 % de la surface totale de la deuxième paroi du diffuseur. Dans l'exemple illustré ce pourtour est formé par le carré à l'intérieur duquel est inscrit le motif en serpentin.

Dans cet exemple, le pourtour périphérique du motif définit une surface s'étendant sur 75% de la surface totale de la deuxième paroi du diffuseur. La coopération des moyens d'appui et du corps autorise une pression du liquide dans la chaudière de l'ordre de 30 bars avec une marge de sécurité de plus de 30 % par rapport à la contrainte maximale de rupture des matériaux utilisés.
- la chaudière comprend des moyens de connexion électriques agencés pour établir une connexion électrique entre la résistance sérigraphiée ou photogravée et une source d'alimentation électrique.
- elle est agencée pour que le liquide sous pression soit disposé de part et d'autre des moyens d'appui de manière à ce que les efforts générés par la pression du liquide soient transmis aux moyens d'appui et s'équilibrent au niveau des moyens d'appui. Ainsi, les efforts générés par la pression sont reportés sur le corps.
- elle comporte deux diffuseurs et les moyens d'appui sont intercalés entre les deuxièmes parois de chacun des diffuseurs.

L'invention a également pour objet un ensemble constitué par une chaudière selon l'une quelconque des caractéristiques précédentes et une pompe destinée à élever la pression du liquide avant son introduction dans la chaudière. L'invention porte également sur une machine à café comportant une telle chaudière.

D'autres caractéristiques, but et avantages de la présente invention apparaîtront à la lecture de la description détaillée qui va suivre, et en regard des dessins annexés donnés à titre d'exemples non limitatifs et sur lesquels:
- la figure 1 est une vue en perspective de l'exemple de chaudière selon l'invention.
- la figure 2 est une vue éclatée d'une partie de la chaudière selon l'exemple illustré en figure 1.
- la figure 3 est une vue éclatée de la chaudière selon l'exemple illustré en figure 1.
- la figure 4 est une vue en perspective de la chaudière illustrée en figure 1 selon une coupe réalisée suivant un plan médian.
- la figure 5 est une vue en perspective de la chaudière illustrée en figure 1 selon une coupe effectuée suivant un plan parallèle au plan médian de la figure 4.
- la figure 6 est une vue en perspective d'un support, d'un diffuseur et d'un flasque selon l'exemple de chaudière illustrée en figure 1.
- la figure 7 est une vue en coupe de la chaudière illustrée en figure 1 selon un plan normal au plan médian de la figure 4.
- la figure 8 est une vue en perspective d'un support et d'un diffuseur d'une chaudière selon l'exemple de réalisation illustré en figure 1.
- les figures 9, 10 et 11 sont des vues en perspective d'un autre exemple de réalisation de l'invention.
- les figures 12 et 13 sont des vues en perspective d'encore un autre exemple de réalisation de l'invention.
- la figure 14 est un mode de réalisation alternatif à celui illustré en figure 6.
- la figure 15 est un mode de réalisation alternatif à celui illustré en figure 7.

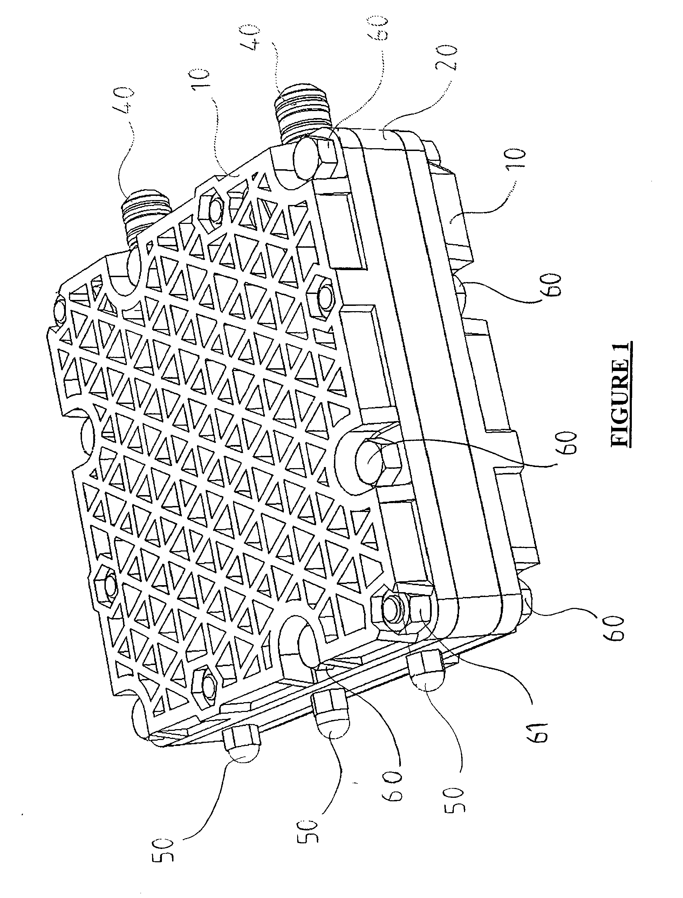

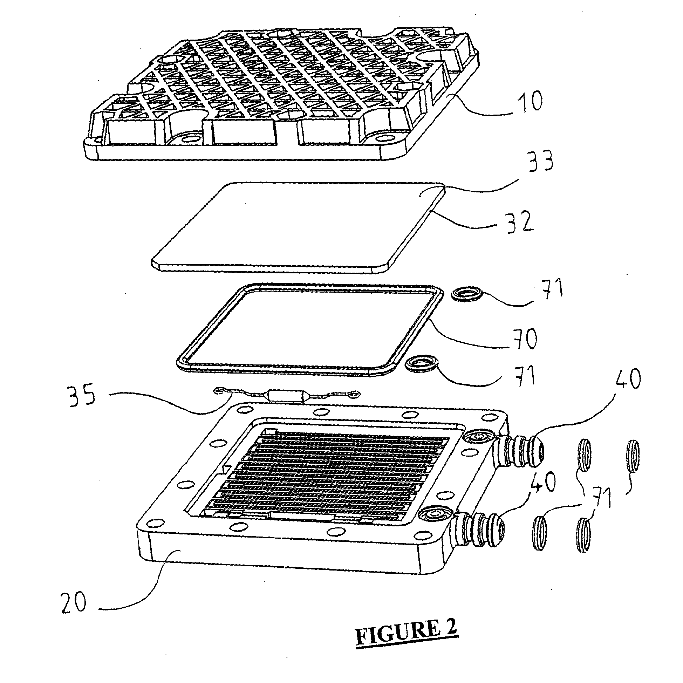

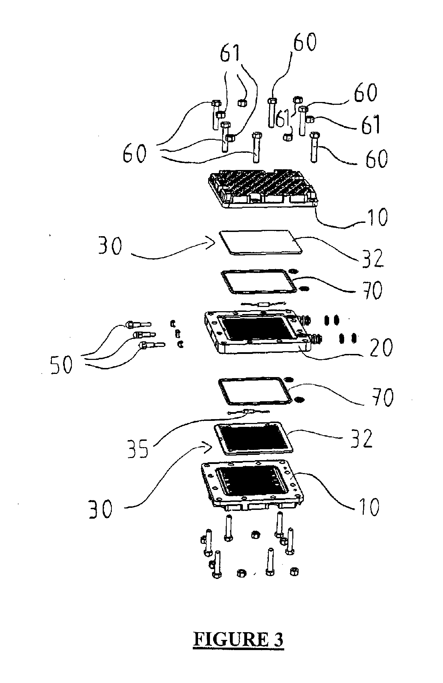

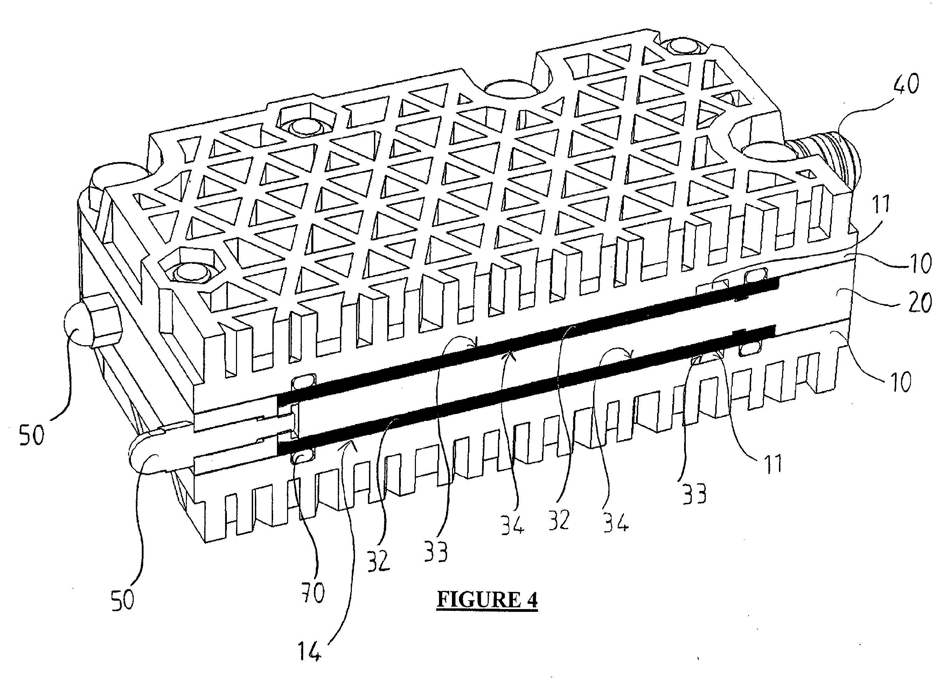

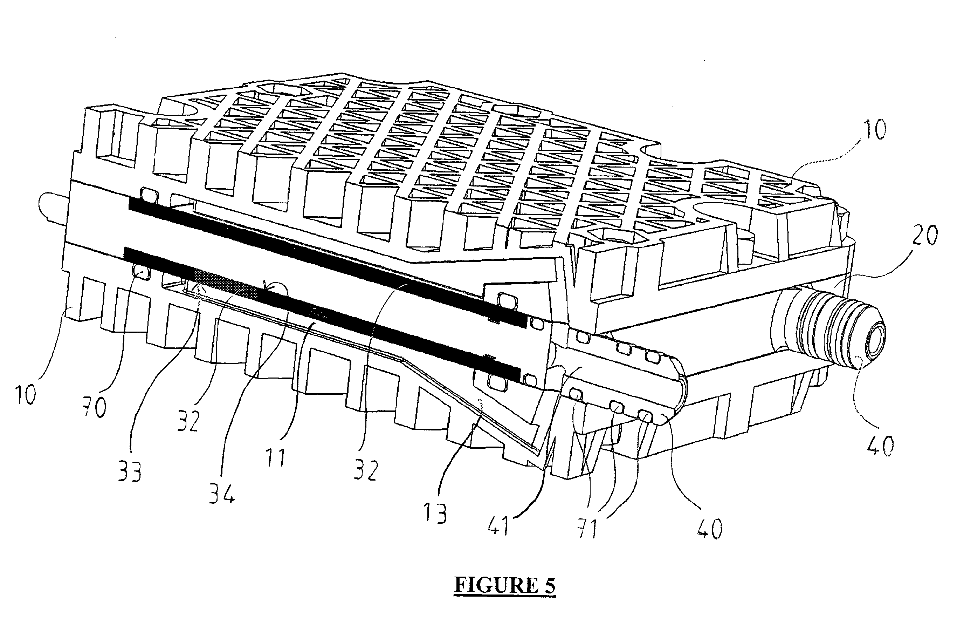

Un exemple de réalisation non limitatif d'une chaudière selon l'invention va maintenant être détaillé en référence aux figures 1 à 8.

La chaudière comporte un corps et des moyens de chauffage 30 formant avec le corps un volume de chauffage 11 à l'intérieur duquel un liquide est destiné à s'écouler et à être chauffé. Plus particulièrement, les moyens de chauffage 30 comportent au moins un diffuseur 32 présentant une première paroi 33 destinée à être disposée au contact du liquide à chauffer. Cette première paroi 33 est destinée à entrer en appui avec une face interne 14 du corps pour définir le volume de chauffage 11.

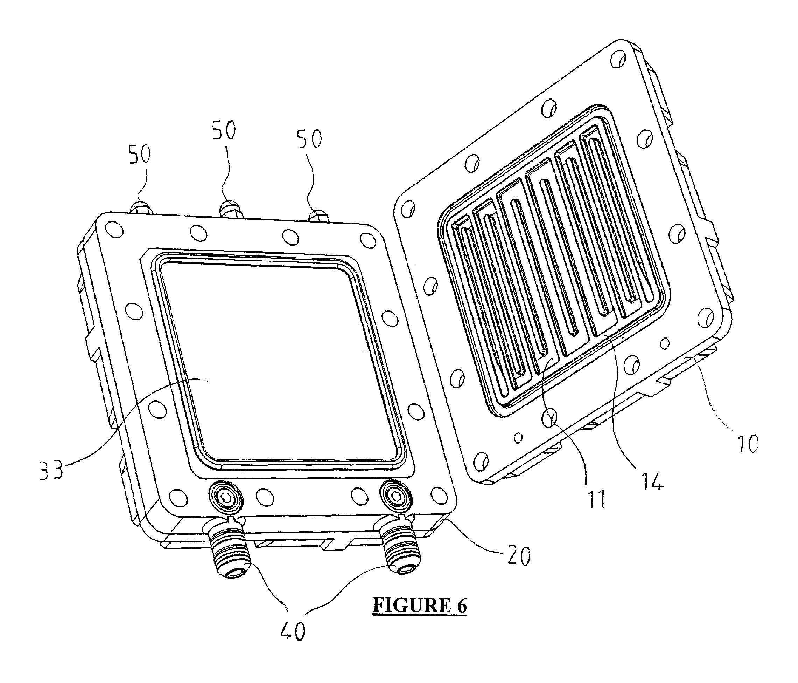

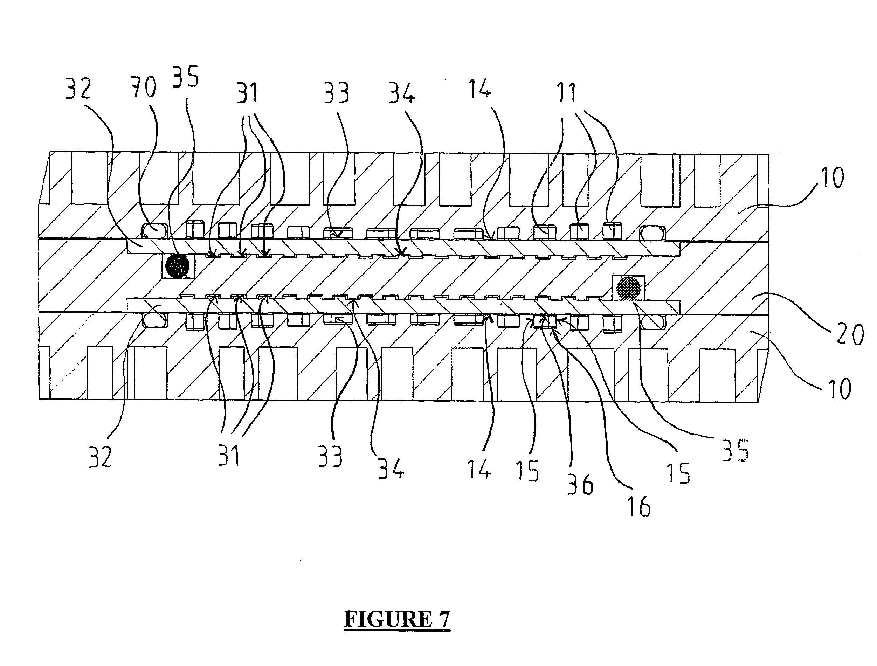

Dans l'exemple représenté, le volume de chauffage 11 définit un canal de circulation en forme de serpentin. Comme illustré sur les figures 6 et 7, ce canal présente deux parois transversales 16, 36 et deux parois latérales 15, 15. Une première paroi transversale 36 est portée par la première paroi 33 du diffuseur et une deuxième paroi transversale 16 est portée par la face interne 14 du corps. Les parois latérales 15, 15 sont portées par le corps et s'étendent en direction du diffuseur 32. Ce mode de réalisation est privilégié lorsque le matériau dans lequel est formé le diffuseur présente une bonne tenue mécanique et/ou une bonne conductivité thermique.

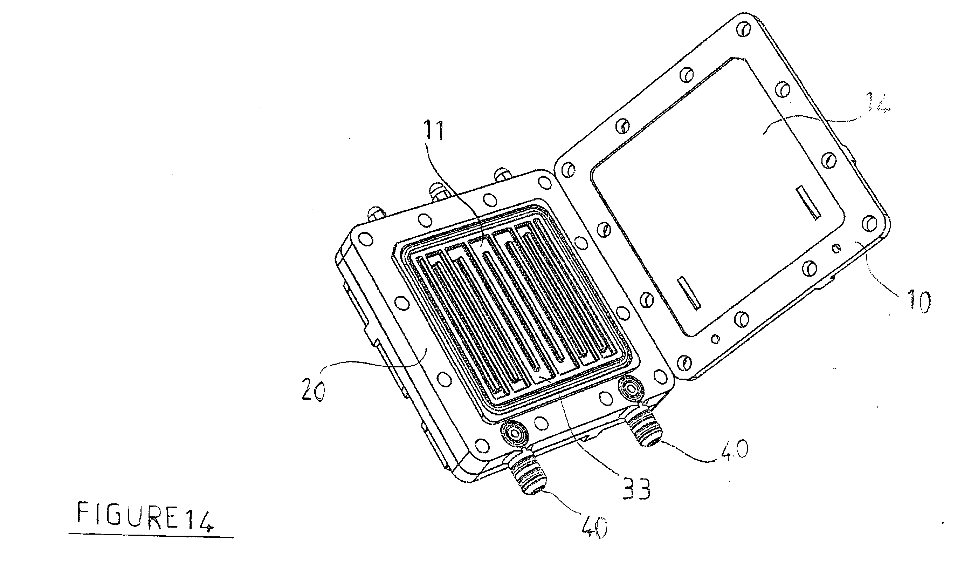

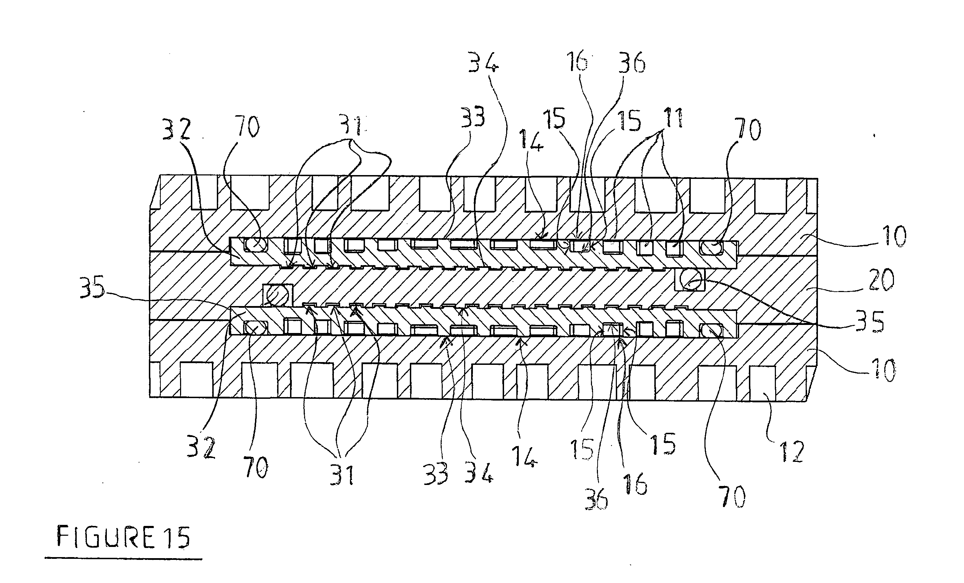

Dans une variante de réalisation, on prévoit que les parois latérales 15, 15 sont portées par le diffuseur 32. Dans cette variante de réalisation, le diffuseur comporte plus de matière que dans la variante précédente. Les parois latérales 15, 15 augmentent la surface de contact entre le diffuseur 32 et le liquide. Les échanges thermiques sont donc favorisés. Par ailleurs, les parois latérales 15, 15 font office de nervures pour le diffuseur 32. Ce dernier présente donc une meilleure tenue à la pression. Ce mode de réalisation est par conséquent privilégié lorsque le matériau dans lequel est formé le diffuseur 32 présente une tenue mécanique relativement faible et/ou une conductivité thermique relativement peu élevée. Avantageusement, le diffuseur 32 est obtenu par matriçage ou moulage. Ce mode de réalisation est illustré en figures 14 et 15.

Les moyens de chauffage 30 comportent au moins un élément résistif disposé sur une deuxième paroi 34 du diffuseur, cette deuxième paroi 34 étant opposée à la première paroi. Avantageusement, cet élément résistif est une résistance sérigraphiée ou photogravée. Elle résulte du dépôt d'une encre résistive. Elle est par exemple de type film épais, habituellement désigné par l'expression "Thick Film" ou encore être de type circuit imprimé réalisé par photogravure. Pour des raisons de clarté, on ne fera référence dans la suite de la description qu'aux références sérigraphiées. Dans chacun des modes de réalisation décrits par la suite, la résistance sérigraphiée pourra être substituées par une résistance photogravée.

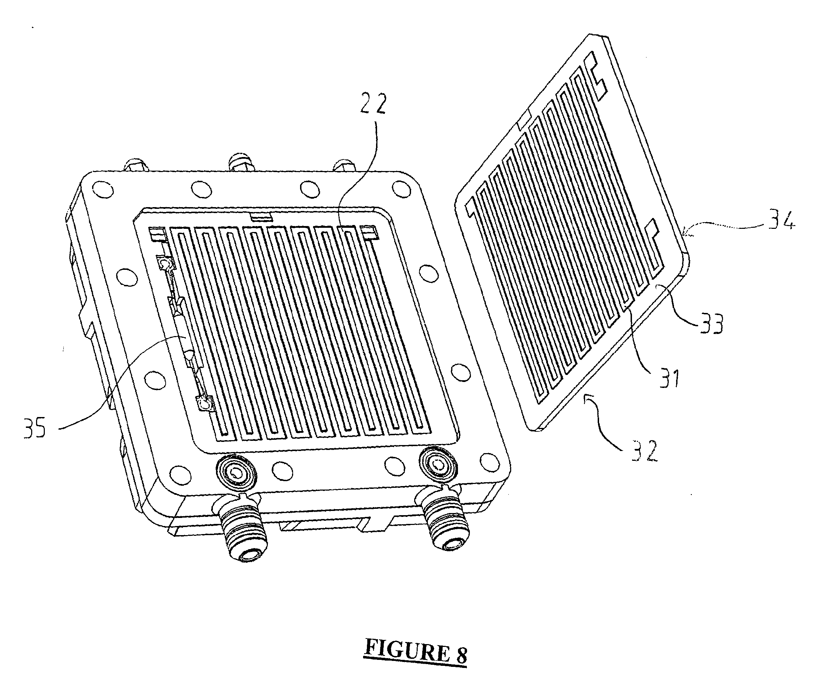

La résistance sérigraphiée 31 comporte au moins une piste formant un motif sur la deuxième paroi 34 comme illustré en figure 8. La résistance comprend une piste sérigraphiée ou pluralité de pistes définissant le motif. Ce motif peut par exemple former un serpentin comme sur l'exemple illustré. Il peut également former une spirale ou un ensemble de cercles concentriques ou juxtaposés ou encore toutes autres formes.

Lorsque la résistance sérigraphiée 31 est alimentée en électricité, elle produit de la chaleur qui se transmet au diffuseur 32 puis au liquide occupant le volume de chauffage 11.

La résistance sérigraphiée 31 peut par exemple présenter une puissance thermique comprise entre 1300 watts et 2500 watts, et plus particulièrement de l'ordre de 1800 watts. Avantageusement, le diffuseur 32 présente une conductivité thermique supérieure ou égale à 10 W/m/K et plus particulièrement une conductivité thermique comprise entre 10 W/m/K et 400 W/m/K. Ce choix de diffuseur 32 permet de favoriser la transmission de chaleur entre la résistance sérigraphiée 31 et le liquide. On choisit de préférence un diffuseur 32 constitué essentiellement en aluminium, en inox, en céramique, en acier émaillé ou en alliage à base de laiton. Avantageusement la première paroi 33 est revêtue d'un revêtement alimentaire. Le diffuseur a pour fonction de servir de substrat pour recevoir la résistance sérigraphiée 31 et pour assurer une bonne diffusivité thermique entre la résistance sérigraphiée 31 et le liquide.

De manière particulièrement avantageuse, la chaudière comprend des moyens d'appui solidaires du corps et conformés pour prendre appui sur la deuxième paroi 34 du diffuseur 32. Ces moyens d'appui sont agencés pour participer de manière substantielle à la tenue en pression de la chaudière.

A cet effet, les moyens d'appui sont placés au contact de la deuxième paroi 34 du diffuseur 32 en de nombreux points d'appui, chacun de ces points d'appui participe à la tenue en pression. Avantageusement, au moins un de ces points d'appui définit une zone disposée de sorte à être entourée au moins partiellement par une ou plusieurs pistes sérigraphiées 31, 31. Ainsi, les moyens d'appui ne sont pas uniquement disposés en périphérie du motif mais prennent appui sur la deuxième paroi 34 du diffuseur 32 à l'intérieur même du motif.

Ainsi, au moins une zone est disposée entre deux portions du motif défini par une ou plusieurs pistes sérigraphiées 31, 31. Cette zone est par exemple disposée entre deux tronçons parallèles définissant le serpentin ou entre deux cercles concentriques ou au sein d'une spirale ou entre deux figures définies par des pistes sérigraphiées etc.

Avantageusement, les moyens d'appui comportent une pluralité de zones. De manière préférée, ces zones sont réparties de façon à assurer une tenue homogène à la pression.

Préférentiellement, ces zones s'appliquent sur une surface correspondant à environ 50 à 98% de la surface de la deuxième paroi 34 qui n'est pas recouverte par les résistances sérigraphiées 31, 31. Ces zones peuvent former une zone continue. Elles peuvent également former une pluralité de zones dans le cas où la résistance définit un motif fermé. De manière encore plus préférentielle, les moyens d'appui sont agencés de sorte à être disposés au contact de la deuxième paroi 34 sur une surface représentant environ 98% de la deuxième paroi 34 non occupée par les résistances sérigraphiées 31, 31. Comme cela sera expliqué la suite, il faut en effet éviter que les moyens d'appui n'entrent au contact de la résistance sérigraphiée 31. On prévoit donc un jeu minimum entre cette dernière et les moyens d'appui. Ainsi, une partie significative de la deuxième paroi 34 est en appui sur les moyens d'appui et permet de transférer à ces derniers les efforts dus à la pression du liquide.

Lorsque le liquide dans le volume de chauffage 11 est porté à une pression relativement élevée, il exerce sur les parois 15, 15, 16, 36 de ce volume de chauffage 11 une pression. Le corps encaisse une partie des efforts générés par cette pression. La première paroi 33 du diffuseur 32 est également soumise à cette pression du liquide. Cependant l'effort généré par cette pression est transmis depuis le diffuseur 32 aux moyens d'appui du fait du contact de ces derniers avec la deuxième paroi 34 du diffuseur 32.

Les moyens d'appui et le diffuseur sont agencés, de par leurs dimensions et leur élasticité respective, pour que les moyens d'appui encaissent l'intégralité ou à tout le moins une partie substantielle de cet effort.

Les moyens d'appui étant solidaires du corps, la tenue en pression est assurée essentiellement par le corps et les moyens d'appui.

Avantageusement, on prévoit une résistance sérigraphiée 31 dont les dimensions et la largeur des pistes notamment, ainsi que la disposition, permettent une répartition homogène de la pression.

Ainsi, la pression du liquide dans le volume de chauffage 11 peut être relativement élevée sans pour autant que le diffuseur 32 n'ait à encaisser la totalité des efforts générés par cette pression. On peut donc se passer de diffuseur 32 robuste et présentant une forte tenue en pression. L'invention offre ainsi une grande liberté de choix dans la conception des diffuseurs. Elle permet notamment de sélectionner des diffuseurs dont l'épaisseur et/ou les matériaux favorise la diffusivité thermique entre la résistance sérigraphiée 31 et le liquide à chauffer. On peut ainsi privilégier des diffuseurs de faible épaisseur.

Par conséquent, l'invention permet d'améliorer la conductivité thermique entre les moyens de chauffage 30 et le liquide tout en offrant la possibilité de porter le liquide à une pression relativement élevée. On peut donc obtenir en un temps réduit de l'eau chaude portée sous pression.

Par ailleurs, lorsque les résistances sérigraphiées 31 sont disposées en périphérie des moyens de chauffage 30, les moyens d'appui limitent l'accès aux pistes résistives. Ainsi, la résistance sérigraphiée 32 est protégée et les risques de brûlures sont réduits. Par conséquent, l'invention permet d'améliorer la sécurité des chaudières connues.

Avantageusement, on prévoit que les moyens d'appui viennent au contact d'une surface substantielle du diffuseur 32. A cet effet, les moyens d'appui présentent une forme sensiblement complémentaire de la résistance sérigraphiée 31. Ainsi, ils n'interfèrent pas avec les pistes sérigraphiées et sont en contact sur presque toute la surface de la deuxième paroi 34 du diffuseur 32 qui n'est pas occupée par la résistance sérigraphiée 31.

La figure 8 illustre clairement les moyens d'appui présentant une forme de serpentin complémentaire de celle de la résistance sérigraphiée 31. On peut également prévoir que cette forme complémentaire définit une spirale, des cercles concentriques etc., correspondant au motif de la résistance sérigraphiée 31.

La figure 7 fait apparaître également les zones de contact entre les moyens d'appui et le diffuseur 32. Sur cette figure, pour des raisons de clarté, la résistance sérigraphiée 31 est représentée comme faisant partie intégrante du diffuseur 32. On observe ainsi que les moyens d'appui présentent un évidement 22 dont le fond est disposé à une certaine distance des pistes de la résistance sérigraphiée 31. Par ailleurs, le plan supérieur des moyens d'appui entre en contact de la deuxième paroi 34 du diffuseur 32.

On désigne par hauteur la dimension d'une piste sérigraphiée, selon la direction dans laquelle elle s'étend depuis la deuxième paroi 34 du diffuseur 32 et d'une manière sensiblement normale à cette deuxième paroi 34. Ainsi, la dimension d'une section de l'évidement 22 selon cette même direction est plus grande que la hauteur d'une piste.

De même, la largeur de l'évidement 22 est plus grande que la largeur d'une piste. Ces dimensions sont choisies de sorte à ce que d'une part les moyens d'appui n'interfèrent pas avec une résistance sérigraphiée 31 et à ce que d'autre part les moyens d'appui demeurent au contact d'une grande surface de la deuxième paroi 34 tout en conservant un encombrement général de la chaudière limité. Ainsi, la chaleur de la résistance n'est pas transmise par contact entre la résistance 31 et les moyens d'appui.

La chaudière comporte un support 20 qui comprend les moyens d'appui Ce support 20 est solidaire des moyens d'appui et permet ainsi à ces derniers et au corps de former un ensemble solidaire et robuste.

Dans une variante de réalisation illustrée aux figures 7 et 8, les moyens d'appui forment avec le support un ensemble monobloc. Cette variante offre une robustesse particulièrement importante.

Selon une autre variante de réalisation, les moyens d'appui sont indépendants du support 20 et sont agencés pour être solidarisés avec ce dernier. Selon cette variante, on prévoit que la chaudière comporte des moyens de mise en position et de maintien en position des moyens d'appui sur le support 20. Ces moyens permettent une simple coopération des moyens d'appui dans le support par emboîtement.

Selon encore une autre variante de réalisation, les moyens d'appui sont formés à la fois par le support 20 et à la fois par un élément rapporté sur le support 20. Ainsi, cet élément et le support 20 définissent des zones distinctes de contact avec la deuxième paroi 34 du diffuseur 32.

La surface des moyens d'appui destinés à venir au contact de la deuxième paroi 34 du diffuseur 32 est désignée par la suite surface d'appui. Avantageusement, la surface d'appui est entourée d'une bordure périphérique. Cette bordure périphérique est conformée pour faciliter la mise en position et le maintien en position du diffuseur 32 sur les moyens d'appui. En effet, le centrage du diffuseur 32 par rapport aux moyens d'appui est important afin d'éviter que les moyens d'appui n'interfèrent avec les résistances sérigraphiées. De manière préférée, la mise en position du diffuseur 32 sur les moyens d'appui se fait par simple apposition et emboîtement.

Dans une variante de réalisation dans laquelle les moyens d'appui sont rapportés sur le support 20, on prévoit que cette bordure soit portée par le support 20 et serve également pour positionner et maintenir les moyens d'appui sur le support 20. Leur mise en position peut alors également se faire par simple emboîtement.

De manière préférée, les moyens d'appui comportent une zone d'appui périphérique sensiblement plane et destinée à entrer au contact d'une zone périphérique complémentaire portée par la deuxième paroi 34 du diffuseur 32. Cette zone complémentaire est dépourvue de résistance. Elle participe efficacement au transfert des efforts entre le diffuseur 32 et les moyens d'appui.

Dans les modes de réalisation dans lesquels les diffuseurs ne sont pas plans mais cylindriques par exemple, la surface d'appui et la zone d'appui périphérique s'inscrivent également dans des cylindres.

Ainsi, l'invention permet d'assurer une pression élevée sans avoir à augmenter l'inertie de la chaudière ou à réduire la diffusivité thermique entre la résistance et le liquide. On peut donc obtenir un liquide à haute température et à haute pression en un temps considérablement réduit.

De préférence, on prévoit que les moyens d'appui font office d'isolant thermique. Ainsi, ils n'augmentent pas l'inertie thermique de la chaudière et n'absorbent pas une partie du flux thermique destiné à passer de la résistance au liquide. Par exemple, on peut choisir de réaliser les moyens d'appui en plastique supportant des températures supérieures à 120 °C et présentant des caractéristiques mécaniques élevées tels que des Polysulfones, (PSU) des Polyamides (Pa), des Polybutylène Téraphtalates (PBT), ou tout autre ayant des renforts par fibre de verre et des qualités alimentaires reconnues.

Dans l'exemple illustré sur les figures 1 à 8, La chaudière est agencée de sorte que le volume de chauffage 11 se situe de part et d'autre de la résistance sérigraphiée 31. Ainsi, les moyens de chauffage 30 sont situés au coeur de la chaudière et le volume de chauffage 11 est disposé en périphérie des moyens de chauffage 30. Par conséquent, les différences de température entre l'environnement de la chaudière et les surfaces de la chaudière en contact avec cet environnement sont plus faibles que dans les chaudières connues dans lesquelles la résistance sérigraphiée enveloppe le volume de chauffage. Les transferts thermiques entre la chaudière et son environnement sont donc réduits. Quasiment toute l'énergie thermique des moyens de chauffage est transmise au liquide. Par conséquent, le rendement thermique de la chaudière est amélioré.

Le corps est conformé pour assurer un rôle d'isolant thermique afin d'isoler thermiquement la chaudière de son environnement. Il sera de préférence réalisé en plastique

Si comme dans l'exemple de réalisation illustrée sur les figures 1 à 8, le diffuseur 32 présente une forme de plaque, le volume de chauffage 11 est disposé de sorte que la première paroi 33 et la deuxième paroi 34 soient tournées au regard du volume de chauffage 11. On a ainsi une structure de type "sandwich".

Des moyens de chauffage en forme de plaque peuvent être obtenus de manière particulièrement simples et offrent une bonne homogénéité de répartition de la température.

Dans l'exemple illustré sur les figures 1 à 8, la chaudière comporte deux diffuseurs 32, 32 dont chacune des deuxièmes parois 34, 34 sont mutuellement placées en regard. Chacune des ces deuxièmes parois 34, 34 comporte au moins une résistance sérigraphiée 31, 31.

Ainsi la résistance sérigraphiée 31 est recouverte et enserrée par le volume de chauffage 11. Ce dernier est disposé de part et d'autre de l'ensemble formé par les diffuseurs 32, 32. La résistance sérigraphiée 31 est logée à l'intérieur de l'ensemble formé par le support 20 et le corps. Par conséquent, les transferts thermiques entre la chaudière et son environnement sont réduits et le rendement thermique de la chaudière est amélioré.

Dans l'exemple illustré sur les figures 1 à 8, le support 20 comprend au moins une zone centrale destinée à accueillir les moyens d'appui et au moins un diffuseur 32. Elle comprend en outre, une zone périphérique disposée en périphérie de la zone centrale.

Cette caractéristique est illustrée en figure 8. La zone périphérique du support est destinée à recevoir quant à elle une partie du corps. Ainsi, la face interne 14 du corps est disposée au contact de la première paroi 33 du diffuseur 32 de sorte à définir avec cette dernière le volume de chauffage 11. Cette zone périphérique participe ainsi à la solidarisation du corps sur le support 20. De manière avantageuse, elle participe également au centrage du corps par rapport au support 20.

Dans l'exemple illustré sur les figures 1 à 8, le corps se compose de deux flasques 10, 10 destinés chacun à être associé à un diffuseur 32 pour définir le volume de chauffage. Chaque flasque 10 présente une face externe et une face interne 14 dont le pourtour vient en appui sur la zone périphérique du support 20. Avantageusement, chaque flasque 10 est agencé pour faire office d'isolant thermique. Il sera de préférence réalisé en plastique.

La chaudière comporte des moyens de fixation amovibles agencés pour permettre une solidarisation et une désolidarisation amovibles du flasque 10 sur le support 20. Dans l'exemple de réalisation représenté, les moyens de fixation amovibles comportent des liaisons vis 60 - écrous 61.

A cet effet, la face externe de chaque flasque 10 comporte des zones d'appui pour recevoir et laisser libre l'accès à une tête de vis ainsi que des zones d'appui pour recevoir des boulons destinés à être respectivement associés à une vis dont la tête prend appui sur la face externe du flasque 10 opposé.

Les moyens de chauffage 11 comportent au moins un thermostat 35. Ce thermostat 35. a pour fonction de limiter la température du diffuseur 32. Il permet ainsi d'éviter que ce dernier n'atteigne une température destructrice. Il empêche également que les pièces, notamment en plastique, placées à son contact n'atteignent une température destructrice. Chaque thermostat 35 est intégré de manière amovible dans un logement prévu dans le support ou dans les moyens d'appui. Il entre au contact d'un circuit électrique associé à la résistance sérigraphiée 31 par simple emboîtement du diffuseur 32 dans les moyens d'appui ou dans le support 20, on peut prévoir notamment d'utiliser un thermofusible. Avantageusement on prévoit un thermostat pour chaque résistance sérigraphiée. Cette caractéristique est illustrée en figure 8.

A titre d'illustration, une chaudière selon l'exemple précédemment décrit présente les caractéristiques suivantes:
- diffuseur d'environ 58 cm² et de 2 mm d'épaisseur
- surface définie par le pourtour du motif : environ 43 cm²
- surface de la zone d'appui périphérique: 15 cm² environ
- surface de la première paroi 33 au contact de l'eau: 32.4 cm² sur une surface totale de 58 cm² soit environ
- épaisseur de la chaudière de 33 millimètres environ
- forme extérieure sensiblement carrée de 100 millimètres de côté environ
- puissance de 1500 watts environ.

Une telle chaudière peut aisément permettre de porter 8.6 cm3 d'eau de 20°C à 95 °C en moins de 10 secondes.

Le support comporte des moyens de connexion fluidiques 40, 40 agencés pour assurer une arrivée du liquide dans le volume de chauffage et une sortie du liquide hors du volume de chauffage.

Avantageusement, la connexion fluidique entre la chaudière et un circuit hydraulique de l'appareil de préparation de boissons chaudes s'établit par un branchement des moyens de connexion de la chaudière dans des moyens complémentaires de connexion fluidique liés à l'appareil. Les moyens de connexion fluidique sont agencés de sorte que la solidarisation de la chaudière sur la machine de préparation de boissons entraîne la connexion fluidique des moyens de connexion fluidique avec les moyens complémentaires de connexion fluidique. De préférence, les moyens de connexion fluidique comprennent une portion mâle munie sur sa périphérie de joints toriques 71. Ces portions mâles sont destinées à être emmanchées respectivement dans une portion femelle portée par les moyens complémentaires de connexion fluidique.

La chaudière comporte également des moyens de connexion électriques agencés pour entrer au contact de moyens complémentaires de connexion électrique liés à la machine de préparation de boissons afin d'alimenter en électricité la chaudière. Ces moyens de connexion électrique comprennent trois connecteurs électriques 50, 50, 50. Les moyens de connexion électrique sont agencés de sorte que lorsque la chaudière est solidarisée sur l'appareil de préparation de boissons, les moyens de connexion électriques entrent automatiquement au contact des moyens complémentaires de connexion électrique.

Ainsi, l'assemblage de la chaudière sur l'appareil entraîne automatiquement une connexion fluidique et une connexion électrique de la chaudière avec des circuits d'alimentation en fluide et d'alimentation électrique respectivement.

Par conséquent, l'intégration de la chaudière dans la machine de préparation de boissons est particulièrement simple puisqu'elle nécessite une seule opération de la part de l'utilisateur. L'invention offre ainsi une grande modularité puisque la chaudière peut être démontée et remontée aisément. Par ailleurs, elle garantit des conditions de sécurité élevées puisqu'une fois désolidarisée de l'appareil, la chaudière n'est plus connectée électriquement à une source d'alimentation électrique ce qui supprime tout risque de choc électrique ou d'activation involontaire des résistances sérigraphiées.

Les moyens de connexion fluidique comportent un conduit d'arrivée 41 et un conduit de sortie 41 du liquide. Les conduits sont logés dans le support 20. De préférence, ils sont disposés au niveau d'un plan médian du support 20. Une des extrémités de chacun de ces conduits débouche à l'extérieur de la chaudière et l'autre de ces extrémités débouche dans un conduit intermédiaire 13 logé dans le corps. Une extrémité de chaque conduit intermédiaire 13 débouche quant à elle dans le volume de chauffage 11. De manière avantageuse, la section de chaque conduit intermédiaire 13 augmente entre le conduit d'arrivée 41 et la chambre de chauffage pour compenser la dilatation du fluide due à son élévation de température entre le conduit d'arrivée 41 et la chambre de chauffage 11.

Le support 20 présente une symétrie par rapport à un plan médian. Par ailleurs, l'ensemble de la chaudière présente une symétrie par rapport à ce même plan. Elle admet en outre un deuxième plan de symétrie normal au plan médian.

Cette symétrie permet de limiter le nombre de pièces différentes et donc le nombre de références pour la chaudière. En effet, la chaudière comporte essentiellement un support 20, deux flasques 10, 10 deux diffuseurs 32, 32 associés chacun à une résistance sérigraphiée 31, 31, deux joints périphériques 70, 70 et deux thermostats 35, 35. Cette symétrie permet également de simplifier significativement l'assemblage et le désassemblage de la chaudière. En effet, les pièces suivantes peuvent être indifféremment disposées d'un côté ou de l'autre du support 20 : flasque 10, diffuseur 32, thermostat 35, joint périphérique 70, vis 30 / écrou 61. La complexité du procédé d'assemblage ainsi que les coûts d'obtention sont par conséquent réduits. Par ailleurs, cette symétrie permet de simplifier le montage et le démontage de la chaudière sur le reste de la machine de préparation de boissons. En effet, chacune des portions mâles des moyens de connexion fluidique peut indifféremment être connectée à une arrivée ou une sortie du réseau d'alimentation fluidique de l'appareil.

La chaudière n'a ainsi pas de sens préférentiel de montage sur l'appareil. La maintenance et le démantèlement en fin de vie de la chaudière sont ainsi grandement facilités puisque chaque pièce peut être aisément démontée ou interchangée.

Avantageusement, le canal de circulation en forme de serpentin comporte des tronçons linéaires parallèles.

De manière préférée, la chaudière est agencée de sorte qu'en fonctionnement, les tronçons linéaires du canal de circulation s'étendent principalement dans une direction verticale. Ainsi, si l'une parmi l'entrée ou la sortie de la chaudière ou si à la fois l'entrée 40 et la sortie 40 sont déconnectées du reste du circuit hydraulique de la machine, seuls les quelques tronçons connectés directement à ces entrées/sorties se videront. En effet, lorsqu'une entrée 40 ou une sortie 40 du canal est déconnectée du circuit hydraulique de la machine, un volume d'eau contenu dans un tronçon pourrait s'échapper par cette ouverture. Il serait alors remplacé par un volume d'air. Ce volume d'air serait alors stoppé au niveau de la portion du canal formant une liaison entre deux extrémités supérieures de tronçons consécutifs. En effet, la densité de l'air empêche ce volume d'air de descendre le long du tronçon suivant. Cette caractéristique présente pour avantage que même lorsqu'une intervention nécessite d'ouvrir le circuit hydraulique de la machine ou de déconnecter en partie au moins la chaudière de ce circuit, la chaudière ne se vide pas complètement. Cette chaudière peut ainsi être retirée entièrement de la machine sans pour autant provoquer une vidange automatique. Ainsi, dès que la chaudière sera à nouveau connectée sur la machine, les moyens de chauffage 30 seront déjà en contact avec l'eau piégée dans la chaudière. Les risques de surchauffe sont donc réduits. Il n'y a pas besoin d'effectuer un nouveau remplissage de la chaudière avant d'obtenir de l'eau chaude.

La longueur du canal de circulation est définie par la distance que parcourt un volume donné de fluide depuis l'entrée jusqu'à la sortie du canal. La longueur du canal conditionne le temps de parcours du liquide dans la chaudière et donc la chaleur transférée au liquide. Par ailleurs, elle conditionne la surface occupée par le canal et par là même l'encombrement du volume de chauffage 11 et de la chaudière

Avantageusement, la section du canal de circulation selon un plan sensiblement normal à sa direction d'écoulement le long des tronçons parallèles varie depuis l'entrée du canal de circulation jusqu'au moins la moitié de sa longueur.

Comme illustré en figure 7, la dimensions des parois transversales 16, 36 croît depuis l'entrée jusqu'au moins le milieu de la longueur du canal. La section du canal conserve une surface sensiblement constante pour assurer un débit constant du liquide. Dès lors, la dimension des parois latérales 15, 15 est adaptée en fonction de la variation des dimensions des parois transversales 16, 36.

La paroi transversale 36 formant interface entre le canal de circulation et le diffuseur 32 contribue de manière significative à l'échange thermique entre le diffuseur 32 et le fluide. Ainsi, plus la dimension de cette paroi transversale 36 est grande, plus la quantité de chaleur apportée au fluide est importante.

Or, la quantité de chaleur transférée dépend également des différentiels de température entre la deuxième paroi 34 du diffuseur 32 et le liquide. Plus ce différentiel décroît, plus la quantité de chaleur échangée diminue.

Ainsi, cette configuration particulière du canal permet de favoriser la transmission de chaleur depuis la résistance sérigraphiée 31 au liquide alors que la température de celui-ci monte.

Selon un mode de réalisation non illustré, la dimension des parois transversales croît depuis l'entrée jusqu'à la sortie du canal de circulation.

Dans l'exemple illustré, d'une manière particulièrement avantageuse, la dimension des parois transversales croît depuis l'entrée du canal de circulation jusqu'au milieu de la longueur de ce dernier. Au-delà de la moitié de cette longueur, cette dimension décroît. Le canal présente une parfaite symétrie selon un plan de sorte à ce que quel que soit le sens de montage de la chaudière, le canal de circulation présente la même configuration. Notamment, chacun des conduits 41, 41 d'extrémité du canal de circulation peut indifféremment être positionné sur une entrée ou une sortie du circuit d'alimentation fluidique porté par la machine.

En variante du mode de réalisation précédemment décrit, on prévoit que le support 20 et les flasques 10, 10 forment un ensemble monobloc. On prévoit alors une ouverture dans cet ensemble monobloc pour introduire les moyens de chauffage 30. Selon cette variante, le corps comporte un capot pour fermer de manière étanche l'ouverture.

D'autres modes de réalisation vont maintenant être présentés. Ces modes de réalisation reprennent l'ensemble des caractéristiques de l'exemple de chaudière précédemment décrit et diffère uniquement selon les caractéristiques mentionnées ci-dessous.

Notamment dans chacun de ces modes de réalisation, la chaudière comporte des moyens d'appui en appui contre la deuxième paroi 34 du diffuseur 32 et aptes à encaisser la pression régnant dans le volume de chauffage 11.

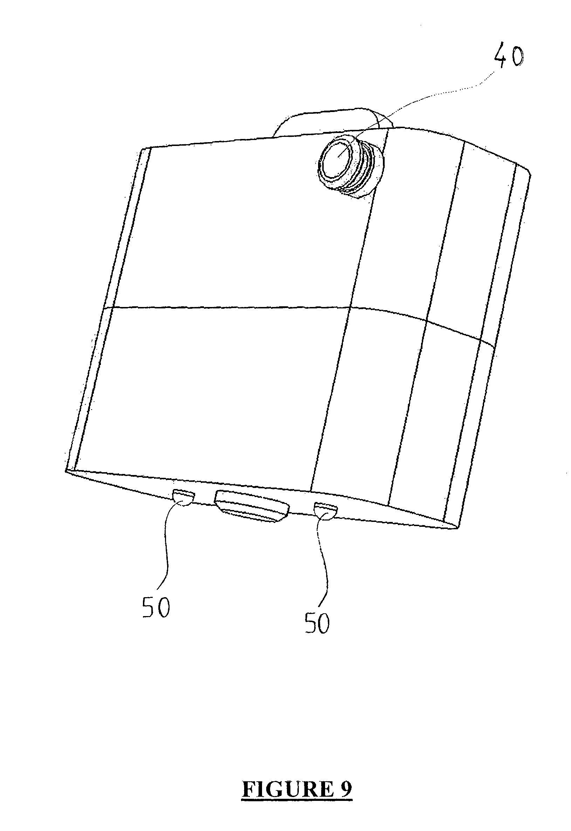

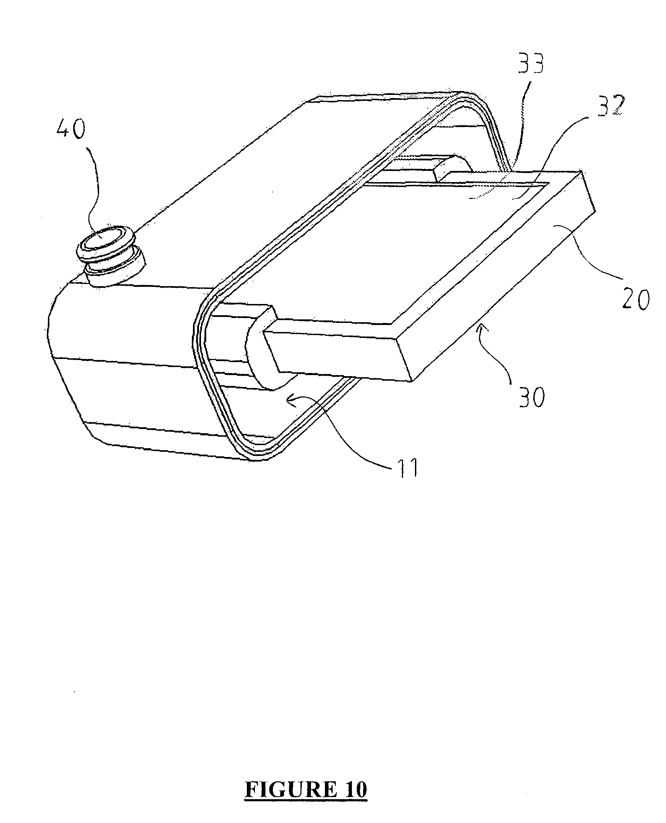

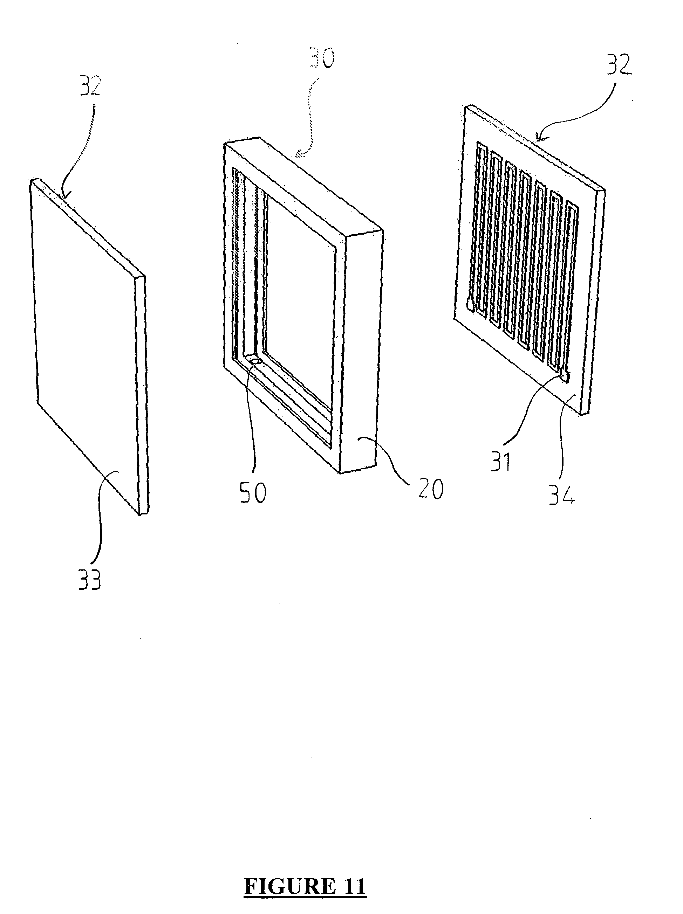

Sur les modes de réalisation représentés sur les figures 9 à 13, le corps forme une enceinte étanche à l'intérieur de laquelle viennent se loger les moyens de chauffage 30. Ces derniers sont ainsi enveloppés par le volume de chauffage 11.

Le support 20 forme un cadre recevant deux diffuseurs 32, 32. Le corps comprend des moyens de solidarisation aptes à coopérer avec les moyens de chauffage 30 pour permettre une solidarisation amovible de ces derniers dans le corps. A cet effet, on prévoit deux glissières agencées pour assurer le guidage en translation des moyens de chauffage 30 ainsi que la mise en position de ces derniers sur le corps. Ces glissières sont agencées pour ne pas entrer au contact des éléments chauffants mais pour coopérer par exemple avec le support 20.

Le cadre peut former de lui-même les moyens d'appui. Il peut également être ajouré, comme illustré. Dans ce cas, il est configuré pour loger des moyens d'appui rapportés à l'intérieur du cadre. Ces moyens d'appui coopèrent avec le cadre pour lui transférer l'effort de pression généré par le liquide.

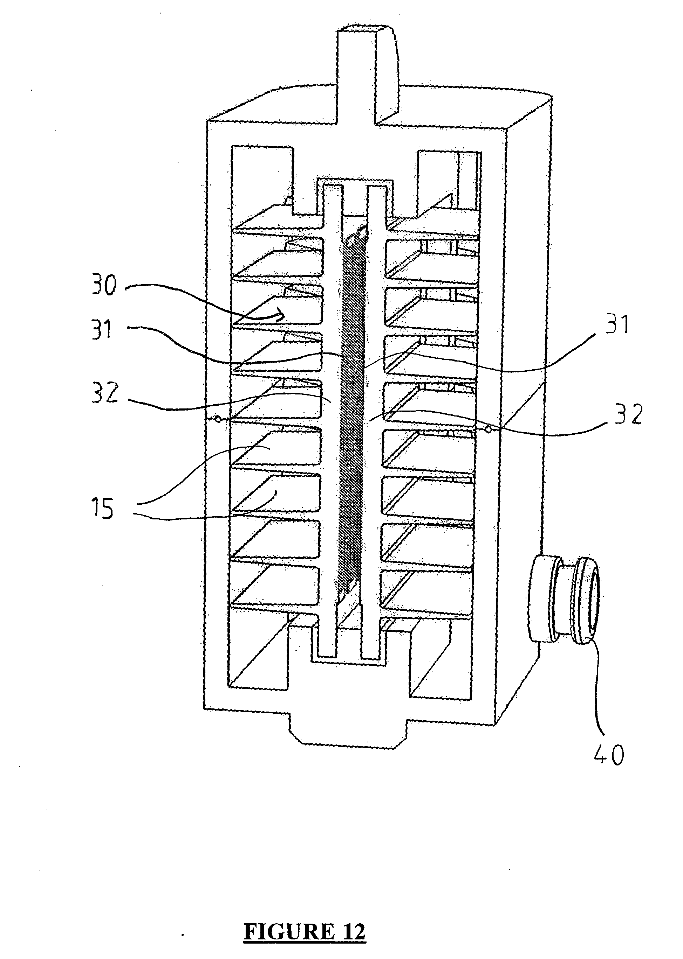

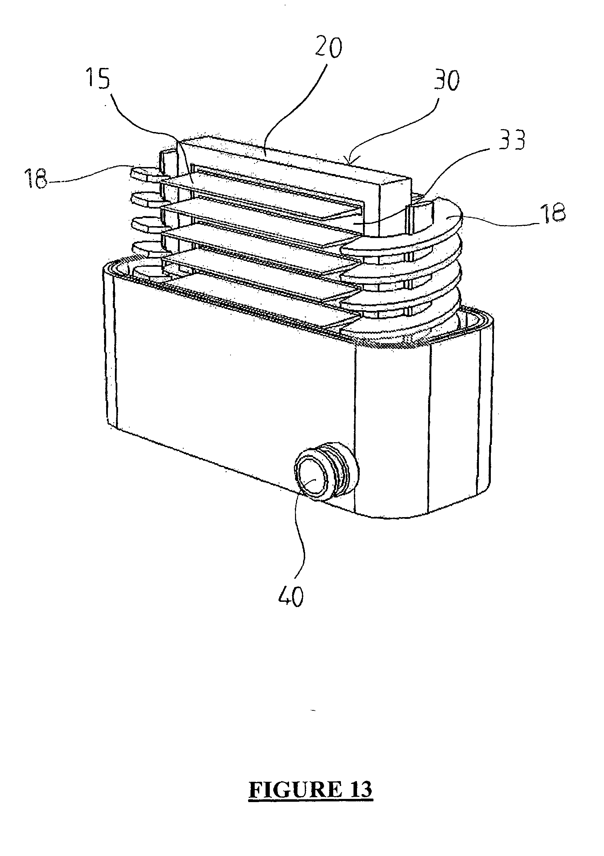

Le mode réalisation illustré sur les figures 12 et 13 constitue une variante du mode de réalisation précédent. Selon ce mode de réalisation, les moyens de chauffage 30 comportent des ailettes destinées à faire office de parois latérales 15 pour canaliser la circulation du liquide. Par ailleurs, elles permettent d'augmenter la surface d'échange entre les éléments chauffants et le liquide. Ces ailettes sont portées par le diffuseur 32 depuis lequel elles s'étendent dans un plan sensiblement normal au diffuseur 32.

Ce mode de réalisation permet d'augmenter très significativement les échanges thermiques entre les moyens de chauffage 30 et le liquide. Le chauffage de ce dernier est donc plus rapide et uniforme.

La figure 13 présente une variante de réalisation de l'exemple représenté en figure 12.

Dans cette variante, la chaudière comporte deux profilés 18, 18. Les profilés 18, 18, les ailettes 15, le diffuseur 32 et le corps sont agencés pour coopérer afin de définir le canal de circulation pour le liquide. Ce canal permet de définir une spirale hélicoïdale d'axe vertical, apte à guider le liquide depuis l'entrée 40 vers la sortie 40 de la chaudière 1. Une telle chaudière, en canalisant vers la sortie le liquide, permet d'optimiser la circulation de ce dernier et tend à augmenter les échanges thermiques.

De manière préférée, on choisit pour le profilé une matière plastique. Le profilé peut être fixé de manière amovible sur le corps, sur les moyens de chauffage 30 ou sur le support 20.

Selon un autre mode de réalisation non illustré, le corps est cylindrique, de section circulaire ou polygonale. Par ailleurs, les moyens de chauffage sont logés à l'intérieur du corps. Ils sont sensiblement cylindriques et présentent une section sensiblement complémentaire de celle du corps. Ainsi, le corps fait office de manchon autour des moyens de chauffage. Le volume de chauffage se situe de part et d'autre des moyens de chauffage et enveloppe la résistance sérigraphiée.

On peut prévoir un seul diffuseur sur lequel sont disposées une ou plusieurs résistances sérigraphiées. On peut également prévoir plusieurs diffuseurs agencés de sorte à former un cylindre.

Dans chacun de ces modes de réalisation les parois latérales du canal peuvent être portées soit par le diffuseur 32 ou soit par le corps.

La chaudière selon l'invention comporte des moyens d'étanchéité comprenant au moins un joint périphérique 70 agencé pour assurer l'étanchéité du volume de chauffage 11. De préférence, le joint 70 est disposé entre la face interne 14 et la première paroi 33 du diffuseur 32. Il est disposé sur l'ensemble de la périphérie du volume de chauffage 11. Ainsi, le liquide reste cantonné entre la face interne 14 du corps et la première paroi 33 du diffuseur 32. Il ne peut alors pas atteindre la deuxième paroi 34 du diffuseur 32 et venir en contact avec la résistance sérigraphiée 31 ou avec des moyens de connexion électrique assurant la conduction électrique entre la résistance sérigraphiée 31 et une source d'alimentation électrique. Cet agencement des moyens d'étanchéité offre une étanchéité particulièrement efficace sûre et simple à mettre en oeuvre. Elle facilite notamment le montage des moyens de connexion électriques.

Avantageusement, pour un diffuseur 32 en forme de plaque, le joint périphérique 70 prend la forme d'un rectangle ou d'un cercle entourant le motif formé par la résistance sérigraphiée 31.

Pour un diffuseur en forme de cylindre, les moyens d'étanchéité comprennent deux joints de section sensiblement identique à celle du diffuseur et disposés, le long de l'axe du cylindre, de part et d'autre de la résistance sérigraphiée.

De manière particulièrement avantageuse, la chaudière est conformée de sorte que les efforts générés par la pression du liquide dans chacun des deux volumes de chauffage s'équilibrent. En effet les deux diffuseurs (32) et les moyens d'appui sont enserrés entre les deux volumes de chauffage et sont ainsi soumis aux poussées générées par chacun de ces deux volumes. Ces poussées sont de directions identiques à savoir une direction sensiblement perpendiculaire à la surface du diffuseur. Dans le cas d'un diffuseur (32) en forme de plaque plane cette direction est perpendiculaire à la plaque. Dans le cas d'un diffuseur (32) en forme de cylindre, cette direction est sensiblement radiale. Ces poussées sont de sens opposés. Par ailleurs, les volumes de chauffage sont agencés de sorte que les forces de pression générés soient de même intensité.

Les forces de pression s'annulent par conséquent au niveau des moyens d'appui. Ces derniers n'ont donc pas besoin de présenter une rigidité importante. L'invention permet ainsi de s'affranchir de contraintes exigeantes en tenue mécanique pour les moyens d'appui. On peut alors limiter l'épaisseur des moyens d'appui et/ou choisir des matériaux présentant une faible rigidité. On choisira notamment des matériaux fortement isolants tels que le PTFE. On peut également choisir le silicone, matériau habituellement peu adapté à un tel usage puisque sa rigidité est très faible. Lorsqu'ils présentent une faible épaisseur de silicone les moyens d'appui atteignent rapidement leur limite de déformation dès qu'ils sont soumis à la pression du liquide. La chaudière est alors rigide et le volume de chauffage est parfaitement isolé thermiquement.

Par ailleurs, cet équilibrage des forces de pression permet de simplifier considérablement la structure de la chaudière puisqu'il n'est pas nécessaire de prévoir une structure pour encaisser l'effort de pression transmis aux moyens d'appui. En effet seul le corps de la chaudière encaisse les efforts de pression. La compacité et la robustesse de la chaudière sont ainsi significativement améliorées.

On peut prévoir que les moyens d'appui comporte un support 20 unique, deux supports juxtaposés, ou encore deux supports enserrant un élément intermédiaire.

Cette spécificité de l'invention est applicable à toutes les formes de diffuseur et de volume de chauffage. Elle s'applique notamment aux diffuseurs et aux volumes de chauffage plans ou cylindriques. Elle s'applique également aux chaudières comportant un volume de chauffage unique disposé de part et d'autre des moyens d'appui. De manière avantageuse elle s'applique aux chaudières présentant une symétrie de part et d'autre des moyens d'appui.

Pour chacun des modes de réalisation évoqués à titre d'exemple, les parois latérales 15 définissant le canal de circulation peuvent être soit portées par le diffuseur 32 soit portées par le corps.

Avantageusement, pour chacun de ces modes de réalisation, le corps entoure les moyens de chauffage et constitue une protection efficace contre l'endommagement de ces derniers et contre les risques de brûlures.

Une chaudière selon l'invention utilise une faible quantité de métal. Cette quantité de métal correspond essentiellement au diffuseur et aux connecteurs. L'invention permet ainsi de limiter le poids de la chaudière et diminue les coûts de matière et de transport induits par l'utilisation de métal. Or le coût du transport est particulièrement important dans un contexte d'éco conception puisque la chaudière est destinée à être séparée du reste de l'appareil pour être envoyée dans un centre de maintenance au cours de sa durée de vie.

Pour chacun de ces modes de réalisation, la chaudière est agencée de manière à ce que son assemblage soit particulièrement simple. Certaines pièces sont assemblées par simple emboîtement (diffuseur et support par exemple). En outre, des moyens d'encliquetage peuvent être prévus afin de se passer de tout outil ou d'opérations de vissage afin d'associer les flasques sur le support.

L'invention n'est pas limitée aux modes de réalisation décrits mais s'étend à tout mode de réalisation conforme aux revendications.

Notamment, l'invention n'est pas limitée aux chaudières présentant deux diffuseurs en forme de plaque.

### REFERENCES

- 10.: Flasque
- 11.: Volume de chauffage
- 12.: Alvéole
- 13.: Conduit intermédiaire
- 14.: Face interne
- 15.: Parois latérales
- 16.: Deuxième paroi transversale
- 18.: Profilé
- 20.: Support
- 22.: Evidement
- 30.: Moyens de chauffage
- 31.: Résistance sérigraphiée
- 32.: Diffuseur
- 33.: Première paroi
- 34.: Deuxième paroi
- 35.: Thermostat
- 36.: Première paroi transversale
- 40.: Entrée/sortie du canal de distribution
- 41.: Conduit d'arrivée / de sortie
- 50.: Connecteurs électriques
- 60.: Vis
- 61.: Ecrous
- 70.: Joint périphérique
- 71.: Joint torique

## Revendications

1. Chaudière pour machine de préparation de boissons chaudes comportant
• un diffuseur (32) comportant une première paroi (33) destinée à être placée au contact d'un liquide à chauffer et une deuxième paroi (34) opposée à la première paroi (33),
• des moyens de chauffage (30) comportant au moins une résistance sérigraphiée (31) ou photogravée disposée sur la deuxième paroi (34) du diffuseur (32) et définissant un motif formé d'au moins une piste résistive,
• un corps délimitant avec la première paroi (33) du diffuseur (32) un volume de chauffage (11) à l'intérieur duquel le liquide est destiné à être chauffé,
**caractérisé en ce qu'**elle comprend des moyens d'appui ainsi qu'un support (20) solidaire du corps, les moyens d'appui étant solidaires du support (20) et étant conformés pour prendre appui sur la deuxième paroi (34) du diffuseur (32) en au moins une zone, la ou les piste(s) résistive(s) étant disposées de part et d'autre de ladite zone, de sorte à ce que les moyens d'appui encaissent au moins une partie de l'effort transmis par le liquide au diffuseur (32) et résultant de la mise sous pression du liquide dans le volume de chauffage (11), les moyens d'appui formant avec le support (20) un ensemble monobloc ou étant agencés pour être solidarisés avec le support (20) par emboitement.

2. Chaudière selon la revendication précédente dans laquelle les moyens d'appui présentent une forme sensiblement complémentaire de la résistance sérigraphiée (31) ou photogravée, de sorte à venir au contact de la deuxième paroi (34) du diffuseur (32) sans interférer avec les pistes résistives.

3. Chaudière selon l'une quelconque des deux revendications précédentes dans laquelle les moyens d'appui sont agencés de sorte que ladite au moins une zone occupe une surface supérieure à 50% de la surface de la deuxième paroi (34) non occupée par la résistance sérigraphiée (31) ou photogravée.

4. Chaudière selon l'une quelconque des deux revendications précédentes dans laquelle les moyens d'appui sont agencés de sorte que ladite au moins une zone occupe une surface comprise entre 80% et 98% de la surface de la deuxième paroi (34) non occupée par la résistance sérigraphiée (31) ou photogravée.

5. Chaudière selon l'une quelconque des revendications précédentes dans laquelle le support fait office de bâti et reçoit les moyens d'appui.

6. Chaudière selon la revendication précédente dans laquelle le support et les moyens d'appui forment une pièce monobloc.

7. Chaudière selon l'une quelconque des revendications précédentes dans laquelle le volume de chauffage (11) est situé en périphérie des moyens de chauffage (30) et les moyens de chauffage (30) sont situés en périphérie des moyens d'appui.

8. Chaudière selon l'une quelconque des revendications 1 à 6 dans laquelle les moyens de chauffage (30) sont situés en périphérie du volume de chauffage (11) et les moyens d'appui sont situés en périphérie des moyens de chauffage (30) de sorte à envelopper ces derniers.

9. Chaudière selon l'une quelconque des revendications précédentes dans laquelle les moyens de chauffage (30) présentent une forme sensiblement cylindrique.

10. Chaudière selon l'une quelconque des revendications précédentes comprenant au moins deux diffuseurs (32, 32) dont les deuxièmes parois (34, 34) sont tournées mutuellement en regard et enserrent les moyens d'appui.

11. Chaudière selon l'une quelconque des revendications précédentes dans laquelle la chaudière présente une symétrie par rapport à un plan médian.

12. Chaudière selon l'une quelconque des revendications précédentes dans laquelle le diffuseur (32) présente une épaisseur comprise entre 2 et 4 millimètres, le pourtour périphérique du motif définit une surface comprise entre 60% et 90% de la surface du diffuseur.

13. Chaudière selon l'une quelconque des revendications précédentes agencée de manière à ce que les efforts générés par la pression du liquide soient transmis aux moyens d'appui (20) et s'équilibrent au niveau des moyens d'appui (20).

14. Chaudière selon la revendication précédente comportant deux diffuseurs (32, 32) et dans laquelle les moyens d'appui (20) sont intercalés entre les deuxièmes parois (34, 34) de chacun des diffuseurs (32, 32).

15. Machine de préparation de boissons chaudes comportant une chaudière selon l'une quelconque des revendications précédentes.

## Patentansprüche

1. Kocher für eine Maschine zur Zubereitung von Heißgetränken, umfassend
einen Diffusor (32) mit einer ersten Wand (33), die dazu bestimmt ist, in Kontakt mit einer zu erhitzenden Flüssigkeit platziert zu werden, und einer zweiten Wand (34), die der ersten Wand (33) gegenüber liegt,
Mittel zum Erhitzen (30) mit wenigstens einem durchgedruckten oder lichtgedruckten Widerstand (31), der auf der zweiten Wand (34) des Diffusors (32) angeordnet ist und ein durch wenigstens eine ohmsche Spur geformtes Muster definiert,
Korpus, der mit der ersten Wand (33) des Diffusors (32) ein Erhitzungsvolumen (11) begrenzt, in dessen Inneren die Flüssigkeit erhitzt werden soll,
**dadurch gekennzeichnet, dass** er Stützmittel sowie einen mit dem Korpus fest verbundenen Träger (20) umfasst, wobei die Stützmittel mit dem Träger (20) fest verbunden und angepasst sind, um sich auf die zweite Wand (34) des Diffusors (32) in wenigstens einem Bereich aufzustützen, wobei die ohmsche Spur oder die ohmschen Spuren auf jeder Seite des genannten Bereichs derart angeordnet ist oder sind, dass jedes der Stützmittel wenigstens einen Teil der Beanspruchung auffängt, die von der Flüssigkeit des Diffusors (32) übertragen wird und aus der Druckbeaufschlagung der Flüssigkeit in dem Erhitzungsvolumen (11) resultiert, wobei die Stützmittel mit dem Träger (20) eine Struktur aus einem Block formen oder angeordnet sind, um mit dem Träger (20) per Einrasten fest verbunden zu werden.

2. Kocher gemäß dem voranstehenden Anspruch, bei dem die Stützmittel eine deutlich komplementäre Form des durchgedruckten oder lichtgedruckten Widerstandes (31) derart aufweisen, dass sie mit der zweiten Wand (34) des Diffusors (32) in Kontakt kommen, ohne mit den ohmschen Spuren zu interferieren.

3. Kocher gemäß einem der zwei voranstehenden Ansprüche, bei dem die Stützmittel derart angeordnet sind, dass der genannte wenigstens eine Bereich eine Fläche von mehr als 50 % der Fläche der zweiten Wand (34) belegt, die nicht von dem durchgedruckten oder lichtgedruckten Widerstand (31) belegt ist.

4. Kocher gemäß einem der zwei voranstehenden Ansprüche, bei dem die Stützmittel derart angeordnet sind, dass der genannte wenigstens eine Bereich eine zwischen 80 % und 98 % inbegriffene Fläche der Fläche der zweiten Wand (34) belegt, die nicht von dem durchgedruckten oder lichtgedruckten Widerstand (31) belegt ist.

5. Kocher gemäß einem der voranstehenden Ansprüche, bei dem der Träger als Gerüst dient und die Stützmittel aufnimmt.

6. Kocher gemäß dem voranstehenden Anspruch, bei dem der Träger und die Stützmittel ein Teil aus einem Block formen.

7. Kocher gemäß einem der voranstehenden Ansprüche, bei dem das Erhitzungsvolumen (11) sich an der Peripherie der Erhitzungsmittel (30) befindet und die Erhitzungsmittel (30) sich an der Peripherie der Stützmittel befinden.

8. Kocher gemäß Anspruch 1 bis 6, bei dem die Erhitzungsmittel (30) sich an der Peripherie des Erhitzungsvolumens (11) befinden und die Stützmittel sich an der Peripherie der Erhitzungsmittel (30) derart befinden, dass diese umhüllt werden.

9. Kocher gemäß einem der voranstehenden Ansprüche, bei dem die Erhitzungsmittel (30) eine deutlich zylindrische Form aufweisen.

10. Kocher gemäß einem der voranstehenden Ansprüche mit mindestens zwei Diffusern (32, 32), deren zwei Wände (34, 34) gegenseitig gegenüber gedreht sind und die Stützmittel einspannen.

11. Kocher gemäß einem der voranstehenden Ansprüche, bei dem der Kocher eine Symmetrie im Verhältnis zu einer medianen Ebene aufweist.

12. Kocher gemäß einem der voranstehenden Ansprüche, bei dem der Diffusor (32) eine zwischen 2 und 4 Millimetern inbegriffene Dicke aufweist, der umlaufende Umfang des Musters eine zwischen 60 % und 90 % inbegriffene Fläche der Fläche des Diffusors definiert.

13. Kocher gemäß einem der voranstehenden Ansprüche, der derart angeordnet ist, dass die durch den Druck der Flüssigkeit generierten Beanspruchungen auf die Stützmittel (20) übertragen werden und bei den Stützmitteln (20) ausgeglichen werden.

14. Kocher gemäß dem voranstehenden Anspruch mit zwei Diffusern (32, 32) und bei dem die Stützmittel (20) zwischen den zwei Wänden (34, 34) jedes Diffusors (32, 32) zwischengeschaltet sind.

15. Maschine zur Zubereitung von Heißgetränken mit einem Kocher gemäß einem der voranstehenden Ansprüche.

## Claims

1. A boiler for a machine for preparing hot drinks comprising
. a diffuser (32) comprising a first wall (33) intended to be positioned in contact with a liquid to be heated and a second wall (34) opposite the first wall (33),
. heating means (30) comprising at least one screen-printed or photo-etched resistance (31) arranged to the second wall (34) of the diffuser (32) and forming a pattern consisting of at least one resistive track,
. a body defining with the first wall (33) of the diffuser (32), a heating chamber (11) wherein the liquid is intended to be heated,
**characterized in that** it comprises bearing means as well as a support (20) made integral with the body, with the bearing means being integral with the support (20) and being so formed as to bear on at least one zone of the second wall (34) of the diffuser (32), with the resistive track(s) being positioned on either side of said zone so that the bearing means absorbs at least a part of the force transmitted by the liquid to the diffuser (32) and resulting from the pressurizing of the liquid in the heating chamber (11), with the bearing means forming, with the support (20) a solid assembly or being so arranged as to be snapped integral with the support (20).

2. A boiler according to the preceding claim, wherein the bearing means has a shape substantially matching the screen-printed or photo-etched resistance (31) so as to come in contact with the second wall (34) of the diffuser (32) without interfering with the resistive tracks.

3. A boiler according to any one of the preceding two claims, wherein the bearing means is so arranged that said at least one zone occupies a surface greater than 50% of the surface of the second wall (34) not occupied by the screen-printed or photo-etched resistance (31).

4. A boiler according to any one of the preceding two claims, wherein the bearing means is so arranged that said at least one zone occupies a surface from 80% to 98% of the surface of the second wall (34) not occupied by the screen-printed or photo-etched resistance (31).

5. A boiler according to any one of the preceding claims, wherein the support acts as a frame and receives the bearing means.

6. A boiler according to the preceding claim, wherein the support and the bearing means form a solid part.

7. A boiler according to any one of the preceding claims, wherein the heating chamber (11) is located on the periphery of the heating means (30) and the heating means (30) is located on the periphery of the bearing means.

8. A boiler according to any one of claims 1 to 6, wherein the heating means (30) is located on the periphery of the heating chamber (11) and the bearing means is located on the periphery of the heating means (30) so as to enclose the latter.

9. A boiler according to any one of the preceding claims, wherein the heating means (30) has a substantially cylindrical shape.

10. A boiler according to any one of the preceding claims, comprising at least two diffusers (32, 32) the second walls (34, 34) of which are mutually facing each other and enclose the bearing means.

11. A boiler according to any one of the preceding claims, wherein the boiler is symmetrical relative to a mid-plane.

12. A boiler according to any one of the preceding claims, wherein the diffuser (32) is from 2 to 4mm thick, the periphery around the pattern forms a surface equal to 60% to 90% of the surface of the diffuser.

13. A boiler according to any one of the preceding claims, so arranged that the forces generated by the pressure of the liquid are transmitted to the bearing means (20) and reach balance at the bearing means (20).

14. A boiler according to the preceding claim, comprising two diffusers (32, 32) and wherein the bearing means (20) is inserted between the second walls (34, 34) of each diffuser (32, 32).

15. A machine for preparing hot drinks comprising a boiler according to any one of the preceding claims.
